# EUROPÄISCHE PATENTSCHRIFT

(11) **EP 2 035 729 B1**
(45) Veröffentlichungstag und Bekanntmachung des Hinweises auf die Patenterteilung: **27.02.2013**
(21) Anmeldenummer: 07729946.9
(22) Anmeldetag: 06.06.2007
(51) Int. Cl.: F16H 61/32, F16H 63/30

(54) **SCHALTEINRICHTUNG FÜR EIN SCHALTGETRIEBE**
SWITCHING DEVICE FOR A GEARBOX
DISPOSITIF DE CHANGEMENT DE VITESSES POUR UNE BOÎTE DE VITESSES

(30) Priorität: 30.06.2006 DE 102006030793
(43) Veröffentlichungstag der Anmeldung: 18.03.2009
(73) Patentinhaber: ZF Friedrichshafen AG, 88038 Friedrichshafen (DE)
(72) Erfinder: RONGE, Ludger, 88097 Eriskirch (DE); BADER, Josef, 88045 Friedrichshafen (DE); BIRKENMAIER, Gerhard, 88069 Tettnang (DE); GRAF, Andreas, 78333 Stockach (DE); HEINZELMANN, Karl-Fritz, 88074 Meckenbeuren (DE); KÖNIG, Hubert, 88074 Meckenbeuren (DE); VETTER, Manfred, 88048 Friedrichshafen (DE); HÖRING, Gerhard, 88709 Hagnau (DE); SCHUH, Henrik, 88045 Friedrichshafen (DE); FÜHRER, Kim, 88131 Lindau (DE); ULBRICHT, Markus, 88069 Tettnang (DE); STEINBORN, Mario, 88046 Friedrichshafen (DE); HEINRICH, Kai, 88289 Waldburg (DE); GESSLER, Frank, 88287 Grünkraut (DE); WÖHR, Klaus, 88074 Meckenbeuren (DE); WALTER, Bernhard, 88048 Friedrichshafen (DE)
(86) Internationale Anmeldenummer: PCT/EP2007/055571
(87) Internationale Veröffentlichungsnummer: WO 2008/000600

(56) Entgegenhaltungen:
- EP-A- 0 819 870
- EP-A- 1 298 363
- WO-A-2005/088172
- DE-A1- 19 525 083

## Beschreibung

Die Erfindung betrifft eine Schalteinrichtung für ein mehrgängiges Schaltgetriebe nach der im Oberbegriff von Anspruch 1 näher definierten Art.

Automatisierte Schaltgetriebe bestehen hinsichtlich ihrer Hauptkomponenten aus konventionellen, gegebenenfalls auch manuell betätigbaren Schaltgetrieben, bei denen das Betätigen der Schalt- und/oder Anfahrkupplung zwischen Antriebsmotor und Getriebe sowie das Wählen und Schalten von Getriebegängen über entsprechende Betätigungsmittel automatisiert erfolgt. Diese Betätigungsmittel sind üblicherweise als hydraulisch oder pneumatisch betätigbare Stellzylinder oder als elektrische Aktuatoren ausgebildet, welche auf Stellmittel für die genannten Getriebefunktionen einwirken. Die Stellmittel können am oder im Getriebe angeordnet sein. Das Hauptgetriebe kann dabei derart ausgebildet sein, dass nur ein Schaltaktuator für die hohen Kraftanforderungen der Schaltvorgänge bei Nkw-Getrieben benötigt wird, da das Anwählen entsprechender Schaltelemente durch einen Wählaktuator mit geringeren Kraftanforderungen realisierbar ist. Zur Erhöhung der Gangzahl des Hauptgetriebes weisen solche Schaltgetriebe noch eine Vorschaltgruppe und/oder eine Nachschaltgruppe auf.

Aus dem Stand der Technik sind Schaltgetriebe bekannt, bei denen das Schalten und Wählen von so genannten Getriebestellern ausgeführt wird. Bei einem Getriebesteller können alle für die Durchführung einer Schaltung notwendigen Betätigungsmittel, Sensoren, (Magnet-)Ventile sowie eine elektronische Steuereinrichtung in einem Mechatronik-Modul zusammengefasst sein. Ein Getriebesteller kann in einer entsprechenden Aussparung eines Getriebegehäuses separat montierbar sein. Mittels geeigneter Einstelllehren können die Betätigungsmittel so ausgerichtet werden, dass beim vertikalen Einfahren des Getriebestellers in das Getriebegehäuse die Verbindungen zwischen den Kolbenstangen der Betätigungsmittel und den Schaltschienen hergestellt werden. Das gleiche gilt entsprechend für die Verbindung der Wähleinrichtung. In der EP 0 541 035 B1 ist ein Getriebeschaltsystem offenbart, bei welchem das Schalten und Wählen von einem Getriebesteller ausgeführt wird, welcher separat in ein Getriebegehäuse montierbar ist.

EP 0 819 870 A offenbart die Merkmale des Oberbegriffs des Anspruchs 1.

Nachteil des Standes der Technik ist, dass sich bei der Montage eines Getriebestellers die über Einstelllehren ausgerichteten Betätigungsmittel erneut verschieben können, wodurch das Eingreifen der Kolbenstangen in Aussparungen der Schaltschienen erschwert bzw. verhindert wird.

In der nicht veröffentlichten Anmeldung der Anmelderin mit dem Aktenzeichen 10 2005 001 551.4 wird eine als Einschienenschalteinrichtung ausgeführte Schalteinrichtung für ein Schaltgetriebe mit einem Wähl- und einem Schaltaktuator beschrieben, umfassend eine Schaltwelle, welche Schaltgabeln bzw. Schaltschwingen umfasst, die in Schiebemuffen zum Schalten der Gänge eingreifen. Die Schaltbewegung ist durch eine axiale Bewegung der Schaltwelle durchführbar und die Wählbewegung ist von der Schaltbewegung kinematisch entkoppelt. Die Wählmechanik der Schalteinrichtung umfasst einen auf der Schaltwelle relativ zu dieser verdrehbar und axial auf der Schaltwelle arretiert angeordneten Mitnehmer- bzw. Schaltfingerring. Der Mitnehmer- bzw. Schaltfingerring weist einen Schaltfinger auf, der in entsprechende Nuten der Schaltgabelarme eingreift. Des Weiteren weist die Wählmechanik ein vom Wählaktuator in Verdrehrichtung antreibbares und axial nicht bewegliches, gehäusefest arretiertes Wählblech bzw. Verriegelungsteil auf, welches die Wählbewegung auf den Mitnehmer- bzw. Schaltfingerring und somit auf den Schaltfinger überträgt. Durch dieses Wählblech werden die Schaltgabeln bzw. Schaltschwingen der nicht zu schaltenden Gänge blockiert.

Der vorliegenden Erfindung liegt die Aufgabe zugrunde, eine Schalteinrichtung für ein Schaltgetriebe anzugeben, bei der die Montage eines an oder in einem Getriebegehäuse anzubringenden Betätigungsmittels ohne zusätzliche Vorrichtungen problemlos ermöglicht wird.

Die der Erfindung zugrunde liegende Aufgabe wird durch eine, auch die kennzeichnenden Merkmale des Hauptanspruchs aufweisende, gattungsgemäße Schalteinrichtung gelöst.

Die erfindungsgemäße Schalteinrichtung weist mindestens ein Betätigungsmittel auf, welches separat an oder in einem Getriebegehäuse eines Schaltgetriebes angebracht wird. Bei der Montage des Betätigungsmittels am Getriebegehäuse, muss dieses in entsprechende Vorrichtungen einer Schalt- bzw. Wählmechanik eingreifen. Um ein solches Eingreifen zu gewährleisten, müssen sowohl das Betätigungsmittel als auch die Schalt- bzw. Wählmechanik in dafür vorgegebene Positionen gebracht werden. In der nachfolgenden Beschreibung wird als Betätigungsmittel ein elektrodynamischer Wählaktuator angenommen.

Eine Wählmechanik der Schalteinrichtung umfasst einen auf der Schaltwelle verdrehbar und axial auf der Schaltwelle arretiert angeordneten Mitnehmer- bzw. Schaltfingerring, welcher einen Schaltfinger aufweist. Des Weiteren weist die Wählmechanik ein Wählblech auf, welches die Wählbewegung auf den Mitnehmer- bzw. Schaltfingerring und somit auf den Schaltfinger überträgt. Am Wählblech ist ein Element angeordnet, beispielsweise eine Mitnehmernase, welches vorzugsweise mit dem Wählblech aus einem Stück gefertigt ist. Das Wählblech ist zur Schaltwelle radial beweglich und axial nicht beweglich, gehäusefest arretiert angeordnet. Ein Anker des am Getriebegehäuse montierten Wählaktuators steht mit der Mitnehmernase des Wählbleches in Verbindung. Durch das Betätigen des Wählaktuators werden die Mitnehmernase und dadurch auch das Wählblech in Umfangsrichtung zur Schaltwelle bewegt. Das Wählblech ist dabei so ausgebildet, dass die Schaltgabeln bzw. Schaltschwingen der nicht zu schaltenden Gänge blockiert werden.

Zur einfachen und sicheren Montage des Wählaktuators am Getriebegehäuse sind der Anker des Wählaktuators aus einem Permanentmagneten und die Endanschläge des Wählaktuators aus einem ferromagnetischen Material ausgebildet. Durch das ferromagnetische Material wird der Anker in einer definierten Position fixiert (Zwangsendlagenfixierung). Das Gehäuse des Wählaktuators ist an einer Trägerplatte angeordnet, oder mit der Trägerplatte aus einem Stück gefertigt. An der Trägerplatte ist ein Dichtmittel angeordnet, welches den Getriebeinnenraum zum Stellerraum abdichtet, beispielsweise ein die Trägerplatte umlaufender O-Ring. Bei montiertem Wählaktuator steht der Anker des Wählaktuators mit der Mitnehmernase des Wählbleches in Verbindung. Vor der Montage des Wählaktuators wird das Getriebe in einen definierten Gang geschaltet, wodurch das Wählblech und somit auch die Mitnehmernase des Wählbleches in einer definierten Position fixiert werden. Die Mitnehmernase des Wählbleches wird dabei von außen sichtbar. Des Weiteren kann der Schwerpunkt des Wählbleches so ausgelegt sein, dass bei waagrechter Position des Getriebes die Mitnehmernase in Richtung des Wählaktuators gezwungen wird, wodurch vor der Montage des Wählaktuators das Getriebe nicht in einen definierten Gang geschaltet werden muss. Der Wählaktuator ist mit einem kegelförmigen Element verschlossen. Bei der Montage des Wählaktuators wird dieser in vertikaler Richtung in eine Aussparung des Getriebegehäuses bewegt, beispielsweise eine Langlochaussparung. Durch die Aussparung am Getriebegehäuse ist die Position des Wählaktuators und somit auch die Position des Ankers vom Wählaktuator zur Mitnehmernase des Wählbleches in Fahrzeuglängsrichtung vorgegeben. Bei einer vertikalen Bewegung des Wählaktuators in Richtung Getriebegehäuse kommt dieser mit der Mitnehmernase des Wählbleches in Kontakt. Durch das kegelförmige Element am Aktuatorgehäuse wird die Mitnehmernase des Wählbleches in Richtung des Ankers des Wählaktuators gezwungen. Hierdurch wird ein sicheres Eingreifen der Mitnehmernase des Wählbleches in den Anker des Wählaktuators gewährleistet. Die auf dem Getriebegehäuse aufgesetzte Trägerplatte des Wählaktuators wird mit dem Getriebegehäuse fest verbunden, beispielsweise über eine Schraubverbindung.

Da der Anker des Wählaktuators aus einem Permanentmagneten und die Endanschläge des Wählaktuators aus einem ferromagnetischen Material bestehen, wird eine Positionsfixierung des Ankers sichergestellt, wodurch keine weitere Vorrichtung zur Montage des Wählaktuators benötigt wird. Der Wählaktuator kann problemlos am oder im Getriebegehäuse montiert werden.

Im Folgenden wird das Grundprinzip der Erfindung an Hand einer Zeichnung beispielhaft näher erläutert.

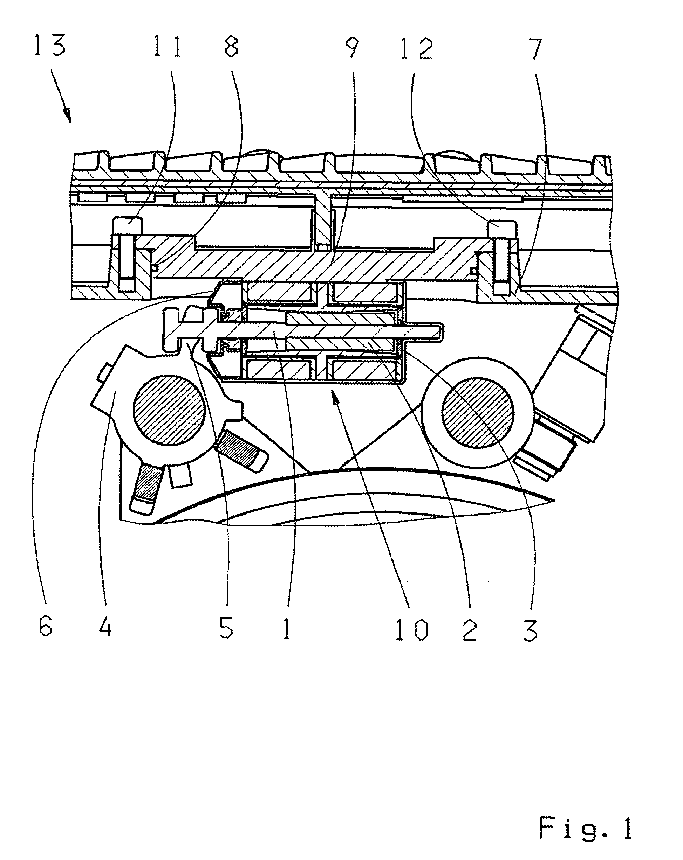

Die einzige Figur zeigt einen Ausschnitt einer Schalteinrichtung 13 für ein Schaltgetriebe. Ein Anker 1 eines Wählaktuators 10 besteht aus einem Permanentmagneten 2. Bei montiertem Wählaktuator 10 steht der Anker 1 des Wählaktuators 10 mit einer Mitnehmernase 5 eines Wählbleches 4 in Verbindung. Eine Fixierung des Ankers 1 in einer für die Montage des Wählaktuators 10 geeigneten Position wird erreicht, indem die Endanschläge 3 des Wählaktuators 10 aus einem ferromagnetischen Material ausgebildet sind, an welches sich der Permanentmagnet 2 anzieht (Zwangsendlagenfixierung). Somit ist keine weitere Vorrichtung zur Endlagenfixierung des Ankers 1 für die Montage des Wählaktuators 10 notwendig. Das Getriebe wird vor der Montage des Wählaktuators 10 in einen definierten Gang geschaltet, damit die Mitnehmernase 5 des Wählbleches 4, welche in den Anker 1 des Wählaktuators 10 eingreifen muss, von außen sichtbar wird. Der Wählaktuator 10 wird mit einem kegelförmigen Element 6 verschlossen. Bei der Montage des Wählaktuators wird dieser in vertikaler Richtung in das Getriebegehäuse 7 eingeführt. Die Position des Wählaktuators 10 in Fahrzeuglängsrichtung ist durch eine Aussparung im Getriebegehäuse 7 vorgegeben. Somit ist auch die Position des Ankers 1 zur Mitnehmernase 5 des Wählbleches 4 in Fahrzeuglängsrichtung vorgegeben. Das kegelförmige Element 6 kann bei der Montage des Wählaktuators 10 zur Unterstützung bzw. Feinjustierung die Mitnehmernase 5 des Wählbleches 4 in Richtung Anker 1 drücken. Durch ein an einer Trägerplatte 9 angeordnetes Dichtmittel 8 wird der Getriebeinnenraum zum Stellerraum abgedichtet. Dies ist deshalb notwendig, weil der Stellerraum u. a. Sensoren, (Magnet-)Ventile und eine elektronische Steuereinrichtung aufweisen kann. Dieses Dichtmittel 8 kann beispielsweise als ein die Trägerplatte 9 umlaufender O-Ring ausgebildet sein. Ist der Wählaktuator 10 komplett in die Getriebeaussparung eingeführt, wird die auf dem Getriebegehäuse 7 aufgesetzte Trägerplatte 9 des Wählaktuators 10 mit dem Getriebegehäuse 7 fest verbunden. Diese Verbindung kann beispielsweise über Schraubverbindungen 11, 12 realisiert werden, wobei die Anzahl der Schraubverbindungen nicht auf zwei festgelegt ist. Nach der Montage des Wählaktuators 10 im Getriebegehäuse 7 ist die Mitnehmernase 5 des Wählbleches 4 im Anker 1 eingeführt, wodurch das Wählen einer Schaltgasse ermöglicht wird. Durch die oben genannten Maßnahmen vereinfacht sich eine Blindmontage des Wählaktuators 10.

### Bezugszeichen

- 1: Anker
- 2: Permanentmagnet
- 3: Endanschläge
- 4: Wählblech
- 5: Mitnehmernase
- 6: Kegel
- 7: Getriebegehäuse
- 8: Dichtmittel
- 9: Trägerplatte
- 10: Betätigungsmittel, Wählaktuator
- 11: Schraubverbindung
- 12: Schraubverbindung
- 13: Schalteinrichtung

## Patentansprüche

1. Schalteinrichtung (13) für ein Schaltgetriebe, welche Betätigungsmittel für das Schalten und Wählen aufweist, wobei die Wählbewegung von einem Wählaktuator (10) ausgeführt wird, welcher mit einer Mitnehmernase (5) eines Wählbleches (4) in Verbindung steht und dessen Anker (1) aus einem Permanentmagneten (2) besteht, **dadurch gekennzeichnet, dass** die Endanschläge (3) des Wählaktuators (10) aus einem ferromagnetischen Material ausgebildet sind, wodurch der Anker (1) des Wählaktuators (10) in einer für die Montage des Wählaktuators (10) definierten Position fixiert wird.

2. Schalteinrichtung (13) für ein Schaltgetriebe nach Anspruch 1, **dadurch gekennzeichnet, dass** das Schaltgetriebe vor der Montage des Wählaktuators (10) in einen definierten Gang geschaltet ist.

3. Schalteinrichtung (13) für ein Schaltgetriebe nach Anspruch 1 oder 2, **dadurch gekennzeichnet, dass** der Wählaktuator (10) in eine entsprechenden Aussparung am Getriebegehäuse (7) montierbar ist.

4. Schalteinrichtung (13) für ein Schaltgetriebe nach Anspruch 1 bis 3, **dadurch gekennzeichnet, dass** bei waagrechter Position des Schaltgetriebes die Mitnehmernase (5) des Wählbleches (4) durch den Schwerpunkt des Wählbleches (4) in Richtung Wählaktuator (10) gezwungen wird.

5. Schalteinrichtung (13) für ein Schaltgetriebe nach einem der vorangegangenen Ansprüche, **dadurch gekennzeichnet, dass** der Wählaktuator (10) mit einem kegelförmigen Element (6) verschlossen ist, wodurch bei der Montage des Wählaktuators (10) die Mitnehmernase (5) des Wählbleches (4) in Richtung Anker (1) drückbar ist.

6. Schalteinrichtung (13) für ein Schaltgetriebe nach einem der vorangegangenen Ansprüche, **dadurch gekennzeichnet, dass** der Wählaktuator (10) mittels eines umlaufenden Dichtmittels (8) den Getriebeinnenraum zu einem Stellerraum abdichtet.

7. Schalteinrichtung (13) für ein Schaltgetriebe nach Anspruch 6, **dadurch gekennzeichnet, dass** das Dichtmittel (8) als O-Ring ausgebildet ist.

8. Schalteinrichtung (13) für ein Schaltgetriebe nach einem der vorangegangenen Ansprüche, **dadurch gekennzeichnet, dass** das Gehäuse des Wählaktuators (10) an einer Trägerplatte (9) angeordnet oder mit der Trägerplatte (9) aus einem Stück gefertigt ist.

9. Schalteinrichtung (13) für ein Schaltgetriebe nach einem der vorangegangenen Ansprüche, **dadurch gekennzeichnet, dass** der in der Endposition eingeführte Wählaktuator (10) über die auf dem Getriebegehäuse (7) anliegende Trägerplatte (9) des Wählaktuators (10) mit dem Getriebegehäuse (7) fest verbunden ist.

## Claims

1. Shift device (13) for a shift transmission which has activation means for shifting and selection, wherein the selection movement is carried out by a selection actuator (10) which is connected to a lug (5) of a selection plate (4) and the armature (1) of which is composed of a permanent magnet (2), **characterized in that** the end stops (3) of the selection actuator (10) are formed from a ferromagnetic material, as a result of which the armature (1) of the selection actuator (10) is fixed in a position defined for the mounting of the selection actuator (10).

2. Shift device (13) for a shift transmission according to Claim 1, **characterized in that** the shift transmission is shifted into a defined gear prior to mounting of the selection actuator (10).

3. Shift device (13) for a shift transmission according to Claim 1 or 2, **characterized in that** the selection actuator (10) can be mounted in a corresponding recess on the transmission housing (7).

4. Shift device (13) for a shift transmission according to Claim 1 to 3, **characterized in that**, in the case of a horizontal position of the shift transmission, the lug (5) of the selection plate (4) is forced by the centre of gravity of the selection plate (4) in the direction of the selection actuator (10).

5. Shift device (13) for a shift transmission according to one of the preceding claims, **characterized in that** the selection actuator (10) is closed with a conical element (6), as a result of which, during mounting of the selection actuator (10), the lug (5) of the selection plate (4) can be pressed in the direction of the armature (1).

6. Shift device (13) for a shift transmission according to one of the preceding claims, **characterized in that** the selection actuator (10) seals off the interior of the transmission from an actuator chamber by means of a circumferential sealing means (8).

7. Shift device (13) for a shift transmission according to Claim 6, **characterized in that** the sealing means (8) is formed as an O-ring.

8. Shift device (13) for a shift transmission according to one of the preceding claims, **characterized in that** the housing of the selection actuator (10) is arranged on a carrier plate (9) or is produced in one piece with the carrier plate (9).

9. Shift device (13) for a shift transmission according to one of the preceding claims, **characterized in that** the selection actuator (10) introduced in the end position is fixedly connected to the transmission housing (7) via the carrier plate (9), which abuts on the transmission housing (7), of the selection actuator (10).

## Revendications

1. Dispositif de changement de vitesse (13) pour une boîte de vitesses, qui présente des moyens d'actionnement pour le changement de vitesse et la sélection, le mouvement de sélection étant effectué par un actionneur de sélection (10) qui est en liaison avec un nez d'entraînement (5) d'une tôle de sélection (4) et donc l'induit (1) est constitué d'un aimant permanent (2), **caractérisé en ce que** les butées de fin de course (3) de l'actionneur de sélection (10) sont réalisées en un matériau ferromagnétique, de sorte que l'induit (1) de l'actionneur de sélection (10) soit fixé dans une position définie pour le montage de l'actionneur de sélection (10).

2. Dispositif de changement de vitesse (13) pour une boîte de vitesses selon la revendication 1, **caractérisé en ce que** la boîte de vitesses est enclenchée dans une vitesse définie avant le montage de l'actionneur de sélection (10).

3. Dispositif de changement de vitesse (13) pour une boîte de vitesses selon la revendication 1 ou 2, **caractérisé en ce que** l'actionneur de sélection (10) peut être monté dans un évidement correspondant sur le boîtier de boîte de vitesses (7).

4. Dispositif de changement de vitesse (13) pour une boîte de vitesses selon les revendications 1 à 3, **caractérisé en ce que**, dans la position horizontale de la boîte de vitesses, le nez d'entraînement (5) de la tôle de sélection (4) est forcé par le centre de gravité de la tôle de sélection (4) dans la direction de l'actionneur de sélection (10).

5. Dispositif de changement de vitesse (13) pour une boîte de vitesses selon l'une quelconque des revendications précédentes, **caractérisé en ce que** l'actionneur de sélection (10) est fermé par un élément de forme conique (6), de sorte que lors du montage de l'actionneur de sélection (10), le nez d'entraînement (5) de la tôle de sélection (4) puisse être pressé dans la direction de l'induit (1).

6. Dispositif de changement de vitesse (13) pour une boîte de vitesses selon l'une quelconque des revendications précédentes, **caractérisé en ce que** l'actionneur de sélection (10) ferme hermétiquement l'espace interne de la boîte de vitesses par rapport à un espace de réglage à l'aide d'un moyen d'étanchéité périphérique (8).

7. Dispositif de changement de vitesse (13) pour une boîte de vitesses selon la revendication 6, **caractérisé en ce que** le moyen d'étanchéité (8) est réalisé sous forme de joint torique.

8. Dispositif de changement de vitesse (13) pour une boîte de vitesses selon l'une quelconque des revendications précédentes, **caractérisé en ce que** le boîtier de l'actionneur de sélection (10) est disposé sur une plaque porteuse (9) ou est fabriqué d'une seule pièce avec la plaque porteuse (9).

9. Dispositif de changement de vitesse (13) pour une boîte de vitesses selon l'une quelconque des revendications précédentes, **caractérisé en ce que** l'actionneur de sélection (10) introduit dans la position d'extrémité est connecté fixement au boîtier de boîte de vitesses (7) par le biais de la plaque porteuse (9) de l'actionneur de sélection (10) s'appliquant sur le boîtier de boîte de vitesses (7).
